# EUROPEAN PATENT APPLICATION

(11) **EP 2 221 723 A1**
(43) Date of publication of application: **25.08.2010**
(21) Application number: 09100136.2
(22) Date of filing: 20.02.2009
(51) Int. Cl.: G06F 11/10, G06F 11/20

(54) **Dual core processor and a method of error detection in a dual core processor**

(71) Applicant: ROBERT BOSCH GMBH, 70442 Stuttgart (DE)
(72) Inventor: Kornhaas, Robert, 73565, Spraitbach (DE)

(57) **Abstract**

The invention discloses a dual core processor and a method of error detection in the dual core processor. Configuration of the components of the dual core processor in the lock step mode is such that the error detection is performed. The method for error detection allows the dual core processor in the lock step mode to detect errors introduced due to electrical disturbances in addition to other errors that may affect the working of the dual core processors.

## Description

### Field of invention

This invention relates to a dual core processor and a method of error detection in a dual core processor

### State of the art

US patent number 7,308,566 discloses a system and method for configuring a lock step mode in a processor module, wherein the processor modules are adapted to be operated in a lock step mode and a method for configuring the processor to work in the lock step mode is disclosed, wherein configuration information provides data if the a lock step mode is desired to be enabled or disabled.

### Advantages of this invention

The dual core processor and the method of error detection according to the independent claims have the following advantages.

The dual core processor comprises two cores which allow execution of different input data and thus many operations can be performed simultaneously. Also the dual core processor can be configured such that working of the two cores with respect to each other is ensured and detection of errors such as electrical disturbances in addition to other errors can be done. This increases the scope of errors that can be detected and diagnosed. Thus robustness of the dual core processor and the efficiency of working of the dual core processor increases.

The method of error detection for a dual core processor operating in a lock step mode enables the detection of error that may be introduced due the electrical disturbances in addition to errors due to improper working of the two cores of the dual core processor. The faults due to electrical disturbances are enhanced when a large number of dual core processors are used together. This method increases the ability of the processor to detect faults due to electrical disturbances in addition to other errors, thus increasing overall diagnostic ability of the dual core processor.

Further improvements and/or advantages are realised by the features of the dependent patent claims.

The ability of the dual core processor to execute different input data in the performance mode and the error detecting in the lock step mode increases the efficiency and ability of the dual core processor to diagnose faults in addition to faults that may occur in the individual cores of the dual core processor.

The delay of the input and output data allows the dual core processor to reduce some faults that may occur in the dual core processors. The delay is provided for the both the first core and second core so that the timing is synchronized. This synchronization ensures that the same input data is being processed during one operation cycle of the lock step mode.

While operating in the lock step mode errors may be introduced due to electrical disturbances after the comparison operation is performed. Thus by comparing twice, the data available from the first error correction code checker and second error correction code checker two output data values are available from the comparison operation at two different instants in time. By voting between these two output data values it is possible to detect that the error was due to electrical disturbances and in addition to other faults occurring in the cores of the dual core processor. This increases the scope of fault detection and diagnosis of the dual core processor and the robustness.

Comparing the output data from the first error correction code checker and the second error correction code checker taken at two different instants ensures that the dual core processor detects the presence of a genuine error and does not shut down the dual core processor due to error introduced due to electrical disturbance. This avoids an unwanted shut down of the dual core processor. Thus increases robustness of the dual core processor against electrical disturbances.

### Brief description of the accompanying drawings

Different modes of the invention are disclosed in detail in the description and illustrated in the accompanying drawing:

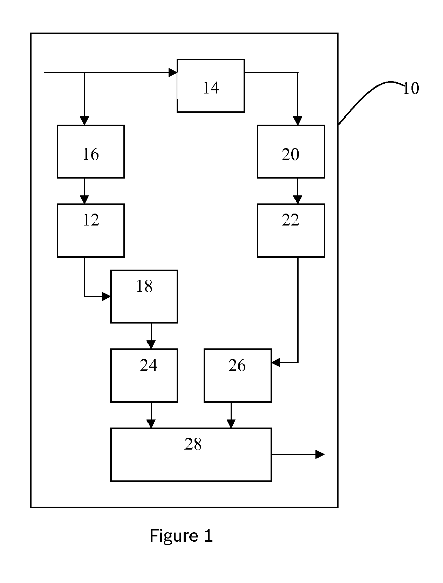

- Figure 1: illustrates a dual core processor comprising various components and the connection between these components.

### Detailed description of the embodiments

Dual core processors are widely used in various industries including the automotive industry for multi tasking operations to be performed in electronic control units. A dual core processor may be defined as a processor having two cores a first core and a second core. A core is simply a processing unit which is able to receive input data, perform operations on the input data and generate an output data. The use of two cores enables the dual core processor to execute multiple operations at the same time. As compared to a single core processor a dual core processor has additional resources to handle time intensive and data intensive operations quicker and more efficiently. The data input and data output of the two cores of the dual core processor are in digital format. To ensure that the digital data is processed properly a clock signal is used. A clock signal is a signal which oscillates between two states a high state and a low state. Different transition points during the oscillation between the two states can be used for synchronizing the working of the two cores.

As mentioned before the advantage of using a dual core processor is that multiple operations can be done simultaneously. This working mode of the dual core processor where both cores and execute different operation or different input data is called a performance mode. The two cores of the dual core processor can also be configured to operate such that the two cores execute the same operation or same input data. This working mode of the dual core processor is called the lock step mode. The connection between the components of the dual core processor while operating in lock step mode is different as compared to the connection between the components while operating in the performance mode. In the performance mode there is no need to use clock delay generators, error correction code generators, error correction code checkers and logic operator means.

Figure 1 illustrates a dual core processor (10) comprising various components and the connection between these components which is useful for the lock step mode. The dual core processor (10) comprises a first core (12) and a second core (14) which receives input data and generates output data. The input data to the first core (12) is delayed by a first clock delay generator (16). A first error correction code generator (18) receives the output data from the first core (12). A second error correction code generator (20) receives the output data from the second core (14). A second clock delay generator (22) delays the output of the second error correction code generator (20). Output data from the first error correction code generator (18) is provided to a first error correction code checker (24). Output data from a second error correction code generator (22) is provided to and a second error correction code checker (26). Output data from the first (24) and second (26) error correction code checker is provided to the logic operator means (28). The logic operator means (28) performs logic operations and generates an error output data to detect the presence or absence of an error.

When the dual core processor (10) is configured to work in the lock step mode as shown in figure 1, presence of error can detected when both the first core (12) and second core (14) are executing the same input data. Errors may be introduced into the input data and the output data due to various types of data corruption which result in an unintended change in the output data. One cause of the error is electrical disturbances. The errors introduced due to electrical disturbances are not continuously occurring errors, they are discrete and occur at certain instants in time. Errors due to electrical disturbances are enhanced and become difficult to detect when a large number of dual core processor are used together.

The clock delay generators (16) and (22) are used along the data flow path of the first core (12) and second core (14) respectively to delay the input data and output data.

This delay is used avoid some common errors that affect the working of the cores (12) and (14). The use of the delay at different positions during the data flow also ensures that synchronization is maintained between the operations performed along the first core (12) and second (14) during one cycle of the lock step mode. The error correction code generators (18) and (20) generate error correction code, which are bits of digital information which indicate type of error associated with the input data provided to the error correction code generators (18) and (20). Further the error correction code checkers (24) and (26) check the consistency of the error correction codes generated. Data is said to be consistent when it is valid, accurate, usable and reliable. Comparison of the consistent data provides information of an error being present in the dual core processor (10). In case an error is detected while operating in the lock step mode the dual core processor may be shut down to prevent continued faulty operation of the first core (12) and second core (14) of the dual core processor.

The method of error detection in the lock step mode can be explained as follows. In the lock step mode input data in received by both the first core (12) and second core (14). The input data received by the first core (12) is delayed using a first clock delay generator (16). The output data from the first core (12) is received by a first error correction code generator (18) which generates an error correction code for this output data. The output data from the second core (14) is received by a second error correction code generator (20) which generates an error correction code for this output data. The output data from the second error correction code generator (20) is delayed using a second clock delay generator (22). The delay of the input data and output data provides synchronization while operating in the lock step mode. The output data from the first error correction code generator (18) and second error correction code generator (20) is received by a first error correction code checker (24) and a second error correction code checker (26) respectively. The first error correction code checker (24) and the second error correction code checker (26) check the consistency of the generated error correction codes. If the error correction codes are not consistent then the error correction code checkers (24) and (26) make this data consistent and provide a consistent error correction code output data. The output data from the error correction code checkers (24) and (26) is received by a logic operator means (28). The logic operator means (28) performs logic operations of comparison and voting to detect the presence or absence of an error.

The output data from both the first error correction code checker (24) and second error correction code checker (26) and the output data from the comparison done in the logic operator means (28) are several bits long. There is a possibility that an error is introduced after the comparison operation in the logic operator means (28) such that only one bit of the output data is changed even though output data from the first error correction code checker (24) and second error correction code checker (26) contains no error. This may lead to an unwanted shut down of the dual core processor. These errors may be due to electrical disturbances which may cause a change in one bit of the output data after the comparison operation has been executed. These electrical disturbances may lead to an inaccurate error signal being generated even though both the first core (12) and second core (14) are working without any errors. Thus it is necessary that errors occurring due to electrical disturbances be detected and rectified to ensure efficient working and proper fault detection. For efficient working of the dual core processor (10) it is also desirable that unwanted shut down is avoided. Detection of error due to electrical disturbances in the logic operator means (28) is done by comparing twice the output data available from the first error correction code checker (24) and second error correction code checker (26), followed by a voting operation.

In the logic operator means (28) the comparison operation is realized by executing an exclusive OR logic operation on the output data available from the first error correction code checker (24) and second error correction code checker (26). The errors introduced due to electrical disturbances are not continuously occurring errors, they are discrete and occur at certain instants in time. Hence the output data available after performing the comparison operation is taken at a second instant in time and compared with the previous output data available from the comparison operation available at a first instant in time. Thus the comparison operation is done twice and two values of output data of the comparison are available. The logic operator means (28) then performs a voting operation on the two values of the output data. The voting operation in the logic operator means is realized by executing an AND logic operation. The output data from the voting operation is used to indicate the presence or absence of an error that is introduced due to electrical disturbances.

The method of detecting error in a dual core processor (10) operating in lock step mode by performing the comparison operation twice and subsequently performing a voting operation ensures that false error detection due to electrical disturbances does not occur. Also unwanted shut down due to false error detection is avoided. Thus the efficiency of working in the lock step mode increases. This method of detecting error also increases the robustness of the dual core processor against electrical disturbances.

One illustrative example of the working of the dual core processor (10) implementing the method of error detection can be explained as follows. Output data available from first error correction code checker (24) is denoted as sample 1 and output data available from the second error correction code checker (26) is denoted as sample 2. The output data available from performing comparison operation twice in the logic operator means (28) is denoted as Cdata 1 and Cdata 2 respectively and the output data resulting from the voting operation performed in the logic operator means (28) is denoted a Vdata. For ease of understanding we use only four bit data, however in accordance with this invention the method can be used for a dual core processor which is able to process any number of bits.
Sample 1: 0101
Sample 2: 0101
Cdata 1: 0001 (indicating that error is introduced due to electrical disturbances at a first instant after comparison operation was performed)
Cdata 2: 0000 (result after comparison operation taken at a second instant)
Vdata : 0000 (indicating no error was detected)
'no error' output data provided by logic operator means (28).
   Many such examples can be worked out to explain working of the method of error detection in accordance with this invention for a dual core processor which is able to process any number of bits. The use of the this method can also be extended to multi core processor wherein while running a comparison mode the errors introduced due to electrical disturbances can be detected.

## Claims

1. A dual core processor, said dual core processor comprising a first and a second core adapted to receive input data and generate output data, said processor further comprising:
(i) a first clock delay generator adapted to delay input data to said first core;
(ii) a first error correction code generator adapted to receive output data from the first core and generate error correction code for this output data;
(iii) a second error correction generator adapted to receive output data from the second core and generate error correction code for this output data;
(iv) a second clock delay generator adapted to delay output data of said second error code generator;
(v) a first error correction code checker adapted to receive output data from said first error correction code generator and check consistency this output data;
(vi) a second error correction code checker adapted to receive output data from said second error correction code generator and check consistency of this output data; and
(vii) at least one logic operator means adapted to perform logic operations on output data available from said first and second correction code checkers and detecting an error.

2. A dual core processor as claimed in claim 1, wherein said processor is adapted to be operated in a performance mode and a lock step mode, in said performance mode said two cores executing different input data and in said lock step mode said two cores executing same input data.

3. A dual core processor as claimed in claim 1 and 2, wherein in said lock step mode said first and second clock delay generators adapted to provide synchronization by delaying input and output data.

4. A dual core processor as claimed in claim 1 and 2, wherein in said lock step mode said logic operator means adapted to compare at least twice output data from said first and second error correction code checkers.

5. A dual core processor as claimed in claim 1,2 and 4, wherein in said lock step mode said logic operator means adapted to perform voting operation on output data available from comparison.

6. A dual core processor as claimed in claim 1,2 and 5, wherein in said lock step mode said logic operation means adapted to provide an error detect output data from result of voting operation.

7. A method of error detection in a dual core processor, said method comprising the following steps:
(i) delaying input data to said first core;
(ii) generating error correction code for output data available from said first core in said first error correction code generator;
(iii) generating error correction code for output data available from second core in said second error correction code generator;
(iv) delaying output data of said second error correction code generator;
(v) checking data consistency of output data available from said first and second error correction code generators in said first and second error correction code checker respectively;
(vi) performing logic operations on output data available from said first and second error correction code checkers; and
(vii) detecting error from output data available after performing logic operations.

## Amended claims

### Amended claims in accordance with Rule 137(2) EPC.

**1.** A dual core processor, said dual core processor comprising a first and a second core adapted to receive input data and generate output data, said processor further comprising:
(i) a first clock delay generator adapted to delay input data to said first core;
(ii) a first error correction code generator adapted to receive output data from the first core and generate error correction code for this output data;
(iii) a second error correction generator adapted to receive output data from the second core and generate error correction code for this output data;
(iv) a second clock delay generator adapted to delay output data of said second error code generator;
(v) the use of the delay at different positions in the data flow through the first core and the second core ensures that synchronisation is maintained between the operations performed in the first core and the second core when the first core and the second core execute the same operation,
(vi) a first error correction code checker adapted to receive output data from said first error correction code generator and check consistency this output data;
(vii) a second error correction code checker adapted to receive output data from said second error correction code generator and check consistency of this output data; and
(viii) at least one logic operator means adapted to perform logic operations on output data available from said first and second correction code checkers and detecting an error.

**7.** A method of error detection in a dual core processor, said method comprising the following steps:
(i) delaying input data to said first core;
(ii) generating error correction code for output data available from said first core in said first error correction code generator;
(iii) generating error correction code for output data available from second core in said second error correction code generator;
(iv) delaying output data of said second error correction code generator;
(v) the delay at different positions in the data flow through the first core and the second core ensures that synchronisation is maintained between the operations performed in the first core and the second core when the first core and the second core execute the same operation,
(vi) checking data consistency of output data available from said first and second error correction code generators in said first and second error correction code checker respectively;
(vii) performing logic operations on output data available from said first and second error correction code checkers; and
(viii) detecting error from output data available after performing logic operations.
